# EUROPEAN PATENT APPLICATION

(11) **EP 0 557 615 A1**
(43) Date of publication of application: **01.09.1993**
(21) Application number: 92122106.5
(22) Date of filing: 29.12.1992
(51) Int. Cl.: B29C 67/14, B29D 30/38

(54) **Method and apparatus for forming cord reinforced elastomeric strips**

(30) Priority: 23.01.1992 US 824278
(71) Applicant: BRIDGESTONE CORPORATION, Tokyo 104 (JP)
(72) Inventor: Bohm, Georg G.A., West, Akron, Ohio 44313 (US); Yang, James H.C., Cleveland, Ohio 44111 (US)
(74) Representative: von Raffay, Vincenz, Dipl.-Ing.

(57) **Abstract**

A method and apparatus for forming strips of elastomeric material containing reinforcing cords embedded therein in a contoured configuration, wherein the transverse distances between the cords are equal, with the distances being greater at a central portion of the strips than at two end portions thereof, so that the cords will lie in a uniformly spaced relationship when a plurality of the strips are placed in abutting relationship on a toroidal mandrel when forming the carcass of a pneumatic tire. A cord positioning roll (8) has a plurality of grooves extending circumferentially around the roll in the desired configured pattern that the cords (18) will take when embedded in the elastomeric material, and in which the circumference of the positioning roll is equal to the length of each strip. A pair of calender rolls (2a,2b) are located adjacent the cord positioning roll and form a uniform strip of elastomeric material (25) which is brought into contact with the reinforcing cords which are positively located and secured in the roll grooves, at the nip between the cord positioning roll (8) and one of the calender rolls (2a), to positively position and embed the cords in the strip of elastomeric material in the desired contoured pattern. A similar second strip of cord reinforced elastomeric material may be produced simultaneously with the first strip and joined thereto, with the cords of one strip lying between adjacent cord pairs of the other strip.

## Description

### BACKGROUND OF THE INVENTION

### Technical Field

The invention relates to the manufacture of cord reinforced elastomeric strips and in particular, strips in which the cords are arranged in a contoured configuration wherein the transverse distances between the cords are equal, with the distances being greater at the central portion of the strip than at the two end portions thereof. Even more particularly, the invention relates to the method and apparatus for the manufacture of cord reinforced elastomeric strips wherein the reinforcing cords are positively positioned within one or more calendered elastomeric strips so that when the reinforced strips are placed over a toroidal mandrel in a tire building operation, the reinforcing cords embedded therein will be properly spaced throughout the toroidal shape of the pneumatic tire produced thereby.

### Background Information

In the manufacture of pneumatic tires, numerous types of apparatus and methods are employed to form a green tire which is subsequently vulcanized into a finished tire. Many pneumatic tire constructions utilize various types and arrangements of reinforcing cords in the carcass thereof which extend from bead to bead of the tire. It is one of the main objects in the building of a tire that the individual reinforcing cords be maintained evenly spaced throughout the tire. This is difficult due to the toroidal cross-sectional shape of the final tire, since the cords after being placed in the uncured elastomeric strips from which the tire is constructed, are expanded radially outwardly prior to curing the tire. This results in movement of the reinforcing cords, which can result in irregular cord spacing which in turn may effect the uniformity and performance characteristics of the tire.

Various methods have been developed to produce a pneumatic tire without the need of expansion of the carcass during manufacture by assembling the carcass components which are in strip form on a toroidally shaped mandrel. One of the key components to be assembled on the mandrel is the carcass ply. Various techniques have been proposed to accomplish this but these involve very complicated or inadequate equipment and require considerable production time.

Various other prior art tire manufacturing processes and equipment using individual strips of material for forming the final product as well as for forming other types of strip material, are set forth in the patents discussed below.

U.S. Patent No. 1,261,821 discloses a process for forming tire casings, in which the casings are formed from strips of leather that are impregnated with rubber and are adjacently positioned in either a circumferential, transverse or diagonal relationship to form the final toroidal shape of the tire.

U.S. Patent No. 1,350,995 discloses another method of forming a tire construction in which an inner continuous circumferential strip is covered by transverse strips which extend from bead to bead with their longitudinal edges abutting.

U.S. Patent No. 1,918,553 discloses another method of making a tire in which the reinforcing fabric is formed from a plurality of strips. The strips are trapezoidal in shape and are positioned adjacently around the circumference of the tire and are joined either in an abutting or an overlapping relationship.

U.S. Patent No. 1,930,764 teaches the forming of a tire carcass from strips of rubberized fabric. The carcass is formed from a plurality of double wedge-shaped sections of rubber fabric that are folded over the periphery of a disc and extend downwardly on opposite sides of the disc.

U.S. Patent No. 3,431,962 shows a reinforcement ply for a tire which is formed from adjacently positioned rubber strips. The ply is formed from strip elements which are positioned in a side-by-side relationship and are separated by spaces. The strip elements are formed from a large quantity of fibers that are impregnated with adhesive and then subsequently cured.

U.S. Patent No. 4,801,344 discloses a method of manufacturing the reinforcement for tires by use of a continuous cord which is wound around two bead rings to define a cylinder by movement of the retention beads.

U.S. Patent No. 5,002,621 discloses a method of making cord reinforced elastomeric strips in which the cords are reciprocatively moved across rubber sheets for coating the cords to form a wave-like cord pattern between a pair of the rubber sheets.

PCT Patent Application No. WO 89/04245 disclosed the formation of reinforced polymeric strip material having cords embedded therein, in which two such strips are combined to form the final composite strip wherein the cords have various configurations within the final strip.

The most closely related known prior art to the present invention is disclosed in published U.K. Patent Application 2 212 441 A and in U.K. Patent 987,983. U.K. application 2 212 441 discloses a method and apparatus for forming tubular articles of variable diameters by reinforced rubber strips. A pair of grooved guide rolls uniformly space and guide individual strands of reinforcing cord toward a calender roll set where they are embedded into calendered strips of rubber at the nip between one of the calender rolls and the grooved guide roll. The strips containing the uniformly arranged reinforcing cords then are joined together to form a composite reinforced rubber strip which then is wound about a mandrel to form a tubular product of a desired axial width and diameter. Although the apparatus of this U.K. application provides means for positively positioning the reinforcing cords into the elastomeric strip, it does so in an equally spaced uniform pattern. Such an equally spaced pattern is not satisfactory in the reinforced elastomeric strips of the present invention, since the strips are ultimately mounted on a toroidal mandrel for the production of a pneumatic tire and such initial uniform spacing of the cords would result in non-uniform spacing of the cords throughout the toroidally shaped tire.

U.K. Patent No. 987,983 discloses a method and apparatus for forming rubber strips containing reinforcing cords which are contoured in a similar manner as in the present invention so that the cords achieve the correct spacing throughout the toroidal configuration of a pneumatic tire. However, in the method of this U.K. patent, the reinforcing cords are moved in a uniformly spaced manner between two moving strips of rubber and then compressed between a roll and a cord positioning rim. The rim has grooves formed in the circumference thereof which are equal to the periodicity of the strip to be produced thereby. However, in this U.K. apparatus the cords must move into the grooves of the cord positioning rim after being placed between the two rubber strips in order to achieve the desired configured pattern within the rubber strips. Depending upon the initial position of the cords upon entering between the two rubber strips, it may be difficult for the cords to move sufficiently therebetween to correctly seat in the grooves of the adjacent rim. This will result in the cord reinforced strip not having the desired array and spacing of reinforcing cords therein, since the cords are not positively positioned in the desired pattern prior to being embedded in the rubber strips as in the present invention.

### SUMMARY OF THE INVENTION

Objectives of the invention include providing an improved method and apparatus for forming strips of elastomeric material containing reinforcing cords embedded therein wherein the transverse distance between the cords are equal, with the distances being greater at a central portion of the strip than at the two end portions thereof, whereby the cords will lie in an equally spaced relationship when a plurality of the strips are placed in an abutting relationship on a toroidal mandrel when forming the carcass of a pneumatic tire; and in which the ends of the strips may flare outwardly to provide a bead turnup area on the strips.

A further objective is to provide such an improved method and apparatus in which the cords are positively placed and retained in their desired contoured configuration in the grooves of a roll prior to being embedded into a strip of elastomeric material at the nip of the grooved roll and one roll of a calendered roll set, thereby preventing any movement of the cords with respect to the elastomeric strips.

Another objective is to provide such an improved method and apparatus in which the circumference of the grooved cord placement roll is equal to the periodicity of the strip to be produced thereby, so that the cord reinforcement pattern is formed upon each revolution of the cord positioning roll, thereby enabling various patterns, including the size and lengths thereof, to be obtained by use of various diameter positioning rolls, each of which will have a slightly different grooved pattern formed in the circumference thereof.

A still further objective of the invention is to provide positive means for retaining the cords in the grooves of the positioning roll, either by applying a vacuum on the roll grooves or by the use of cord retaining rollers extending axially across a section of the positioning roll closely adjacent to the nip of the calender transfer roll.

A further objective of the invention is to be able to apply a strip of non-reinforced elastomeric material, which preferably is formed of a different compound than that of the reinforced strip unto the cord reinforced strip, to provide another component of the tire carcass, such as the innerliner.

Another objective of the invention is to provide such a method and apparatus in which two separate strips of elastomeric material have the contoured pattern of reinforcing cords therein, which strips then are joined so that the individual cords of each strip lie between adjacent cord pairs of the other strip to provide an elastomeric strip containing a greater number of reinforcing cords than would be practical if the same number of reinforcing cords were attempted to be placed in a single strip of elastomeric material by the use of a single set of calender rolls and single grooved cord positioning roll.

Still another objective of the invention is to provide means for uniformly spacing the reinforcing cords upstream of the cord positioning roll as the cords move from individual cord supplies toward the cord positioning roll, to facilitate the movement of the cords into the grooves of the positioning roll regardless of the position on the roll in which the cords enter the contoured spaced grooves.

Another objective of the invention is to provide such a method and apparatus in which the longitudinal edges of the elastomeric strips containing the reinforcing cords are automatically trimmed so that the reinforced strip configuration assumes that of the configuration of the internal reinforcing cords, and in which the strips then can be cut transversely into discrete lengths as a continuous reinforced strip emerges from between the calender and cord positioning rolls.

A further objective is to provide such a method and apparatus in which one longitudinal edge of one cord reinforced strip overlaps the longitudinal edge of an adjacent reinforced strip with the cords of one strip lying between adjacent pairs of cords of the other strip to interlock the two strips firmly together.

A still further objective of the invention is to provide such an improved method and apparatus which achieves the stated objectives in an economical and efficient manner enabling the same to be utilized in the production of elastomeric strips for the subsequent manufacture of pneumatic tires.

These objectives and advantages are obtained by the improved method of the invention, the general nature of which may be stated as a method for forming a strip of elastomeric material containing reinforcing cords embedded in the elastomeric material in a contoured configuration including the steps of providing a cord positioning roll formed with a plurality of grooves extending circumferentially around the roll wherein the circumference of the roll is equal to the length of the reinforced strip and the grooves have the contoured configuration that the cords will take when embedded in the elastomeric material; feeding a plurality of individual reinforcing cords from a plurality of individual cord supplies toward the cord positioning roll and into the grooves of the roll to uniformly space the cords; feeding elastomeric material between the nip of a pair of rotating calender rolls to form a uniform strip of elastomeric material; and bringing the uniform strip of elastomeric material into direct contact with the spaced cords at a nip between the cord positioning roll and a transfer roll to at least partially embed the spaced cords into the strip of elastomeric material to form the reinforced strip containing the contoured cord configuration.

These objectives and advantages are further obtained by the improved apparatus of the invention, the general nature of which may be stated as apparatus for forming a strip of elastomeric material containing reinforcing cords embedded in the elastomeric material in a contoured configuration including, a plurality of individual reinforcing cord supplies; a first cord positioning roll formed with a plurality of grooves extending circumferentially around the roll and having the contoured configuration that the cords will take when embedded in the elastomeric material, and with the circumference of the roll being generally equal to the length of the contoured configuration of cords in the reinforced strip; means for feeding individual cords from the cord supplies into the grooves of the cord positioning roll; a supply of elastomeric material; and a pair of calender rolls for forming a uniform strip of elastomeric material from a supply of elastomeric material, one of said calender rolls being closely adjacent the cord positioning roll to provide a nip therebetween whereby the positively positioned cords in the positioning roll are placed directly into the elastomeric material at the nip to form a strip of elastomeric material containing reinforcing cords arranged in the contoured configuration.

### BRIEF DESCRIPTION OF THE DRAWINGS

Preferred embodiments of the invention, illustrative of the best modes in which applicant has contemplated applying the principles, are set forth in the following description and are shown in the drawings and are particularly and distinctly pointed out and set forth in the appended claims.
FIG. 1 is a generally diagrammatic perspective view showing one embodiment of the apparatus for carrying out the method of the invention for producing the contoured reinforced elastomeric strips;
FIG. 2 is a diagrammatic side elevational view of the method and apparatus of FIG. 1;
FIG. 3 is a diagrammatic top plan view of the strip forming apparatus of FIG. 2;
FIG. 4 is a top plan view of one portion of one of the cord positioning rolls;
FIG. 5 is a plan layout of the cord positioning roll of FIG. 4;
FIG. 5A is a view similar to FIG. 5 showing a modified cord positioning roll;
FIG. 6 is an enlarged fragmentary sectional view of one of the cord positioning rolls of FIGS. 1-3 containing the reinforcing cords in the grooves thereof;
FIG. 7 is an enlarged sectional view of the upper and lower elastomeric strips produced by the apparatus of FIGS. 1-6, having the cords embedded therein in a separated position;
FIG. 8 is an enlarged sectional view taken on line 8-8, FIG. 2;
FIG. 9 is a diagrammatic view of a section of a toroidally shaped mandrel having a plurality of the reinforced contoured strips produced by the method and apparatus of the invention, arranged thereon in an abutting relationship in the manufacture of a pneumatic tire;
FIG. 10 is a diagrammatic side elevational view similar to FIG. 2, showing a modified form of the invention using grooved guide rolls upstream of the grooved positioning rolls;
FIG. 11 is a diagrammatic top plan view of the apparatus of FIG. 10;
FIG. 12 is an enlarged fragmentary sectional view taken on line 12-12, FIG. 10;
FIG. 13 is a diagrammatic side elevational view similar to FIGS. 2 and 10, showing a further modified embodiment of the invention in which a non-reinforced elastomeric strip is applied by a calender roll set to the elastomeric strip containing the contoured reinforcing cords;
FIG. 14 is an enlarged fragmentary sectional view taken on line 14-14, FIG. 13;
FIG. 15 is an enlarged fragmentary sectional view taken on line 15-15, FIG. 13;
FIG. 16 is an enlarged fragmentary exploded perspective view showing the reinforced elastomeric strip and the non-reinforced elastomeric strip produced by the apparatus of FIG. 13 prior to being joined;
FIG. 17 is a diagrammatic side elevational view similar to FIGS. 2, 10 and 13 showing a further modification of the improved method and apparatus of the invention;
FIG. 18 is a diagrammatic top plan view of the apparatus shown in FIG. 17;
FIG. 19 is an enlarged sectional view taken on line 19-19, FIG. 17;
FIG. 20 is an enlarged fragmentary sectional view showing the overlapping of the longitudinal edges of a pair of the reinforced elastomeric strip when forming the carcass of a pneumatic tire; and
FIG. 21 is an enlarged fragmentary sectional view of the reinforced elastomeric strip having a modified arrangement of reinforcing cords embedded therein.

Similar numerals refer to similar parts throughout the drawings.

### DESCRIPTION OF THE PREFERRED EMBODIMENT

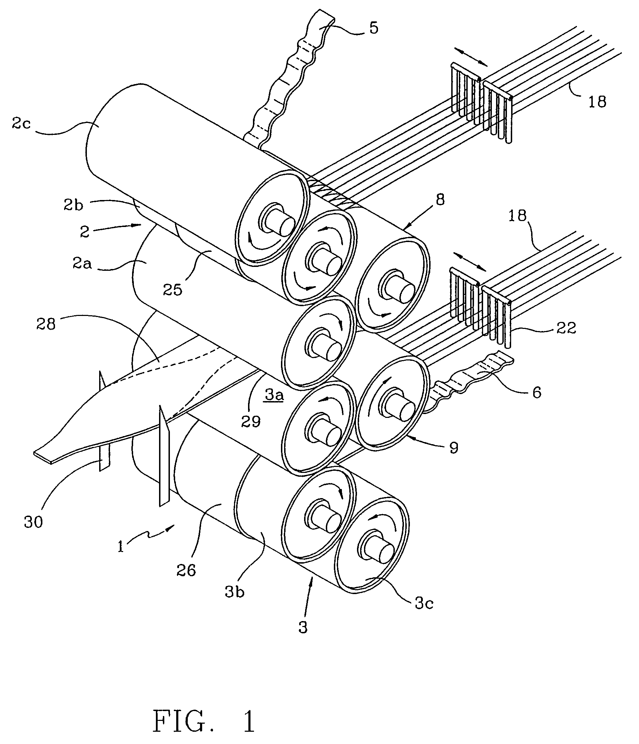

A first embodiment of the improved apparatus for carrying out the method of the invention is shown particularly in FIGS. 1-3, and is indicated generally at 1. Apparatus 1 includes upper and lower roll calender sets indicated generally at 2 and 3. Each calender set consists of three rolls indicated at 2a, 2b and 2c and 3a, 3b and 3c, respectively. Each calender set is supplied with a feed strip of elastomeric material 5 and 6 from a usual known extruder (not shown). The strips pass between the nips of the adjacent roll pairs and subsequently merge together at the nip between transfer rolls 2a and 3a. The above described calender roll set arrangement is well known in the art and can be varied without affecting the concept of the invention.

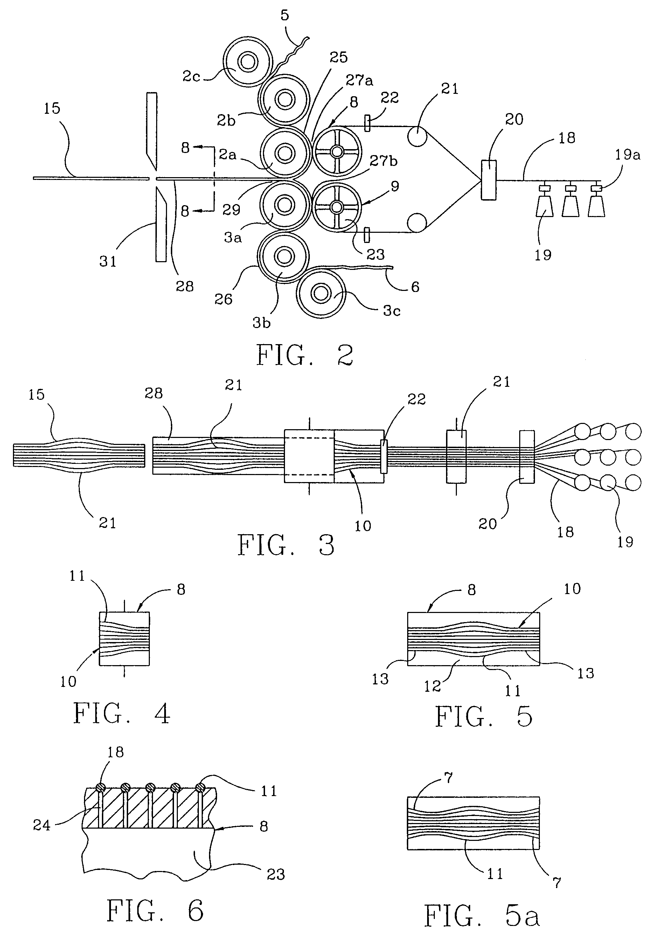

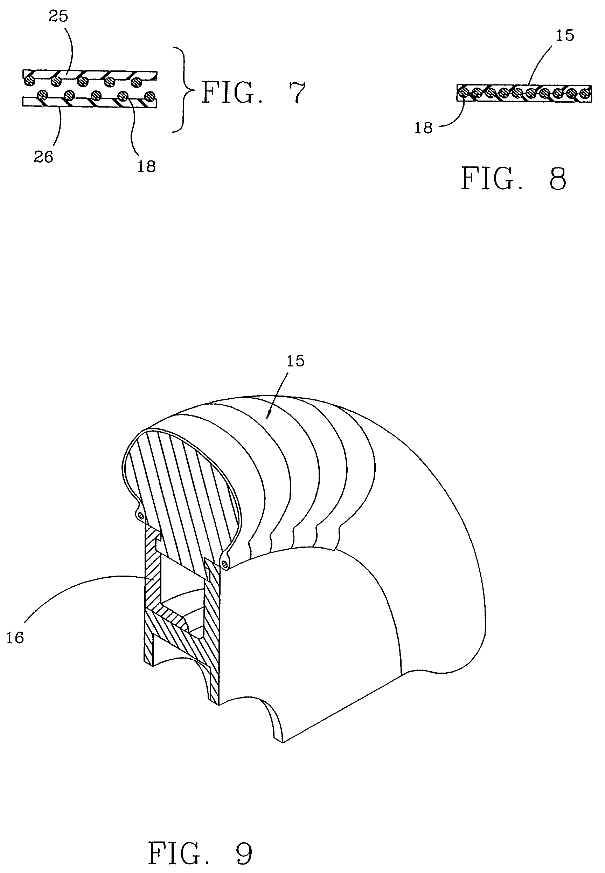

In accordance with the invention, a pair of grooved cord positioning rolls indicated generally at 8 and 9, are mounted adjacent calender transfer rolls 2a and 3a respectively. The circumference of rolls 8 and 9 are formed with a grooved periodic pattern 10 as shown particularly in FIGS. 4 and 5. The circumference of each roll is equal to the periodicity of the desired cord reinforcing pattern to be provided in each of the contoured strips, as shown particularly in FIG. 5 in which grooved pattern 10 is illustrated in plan view. As shown in FIGS. 4 and 5, the transverse spacing between the individual grooves 11 is greater at a central portion 12 than at end portions 13. This spacing is necessary so that when the individual cord reinforced strips 15 which are formed by the method and apparatus of the present invention, are placed on a toroidal shaped tire building mandrel 16 as shown in FIG. 9, the spacings of the cords will be uniform throughout the toroidal shape of the pneumatic tire ultimately produced thereby.

In a modified embodiment shown in FIG. 5A, the ends 7 of the roll pattern are flared outwardly so that the ends of the reinforced strip produced thereby have a similar flared configuration to provide the turnup ends of the carcass when assembled with the beads of a pneumatic tire as shown in FIG. 9.

A plurality of usual tire carcass reinforcing cords 18, from individual spools 19 which may be mounted on a creel (not shown) or other dispensing mechanism, are fed through a tensioning device 19a and a separating device 20 and then over tensioning rolls 21. Next the cords move through reciprocating cord guides 22 prior to entering into the individual grooves 11 formed in cord positioning rolls 8 and 9.

Positioning rolls 8 and 9 may be formed with a plurality of vacuum chambers 23 which communicate with the individual grooves 11 (FIG. 6) by a plurality of ports 24. For example, each positioning roll 8 and 9 may be formed with four vacuum chambers 23 each forming a quadrant of the roll so that as the individual cords 18 approach the adjacent calender rolls 2a and 3a, the cords are securely retained in their individual grooves 11 by applying a vacuum thereon through connecting ports 24. This ensures that the individual cords remain in their respective grooves until they are embedded into the uniformly calendered strips of elastomeric material indicated at 25 and 26 (FIG. 7) formed from the elastomeric feed strips 5 and 6, respectively.

Thus, in accordance with one of the main features of the invention, individual cords 18 are positively retained in the desired configured spacing in grooved patterns 10 of rolls 8 and 9, enabling them to be accurately positioned and embedded in the calendered strips 25 and 26 at nips 27a and 27b between rolls 8 and 9 and calender rolls 2a and 3a, respectively. Thus, cords 18 cannot move or wander as they are brought into position with the calendered strip thereby ensuring the accurate placement thereof in the strips to form the contoured cord configuration 21 within strip 15 as shown in particular in FIG. 3. This produces a continuous strip 28 of elastomeric material having a repeating cord pattern 21 therein which is being discharged from nip 29 between rolls 2a and 3a. The longitudinal edges of strip 28 preferably are trimmed by cutting blades 30 (FIG. 1) or other type of trimming mechanism to match the contoured pattern 21 of the reinforcing cords embedded therein. This is followed by the transverse cutting of continuous strip 28 by a cutting mechanism 31 (FIG. 2), to form the individually contoured cord reinforced strips 15.

Calendered strips 25 and 26 containing the contoured cord configuration 21 as shown in FIG. 7, are axially offset with respect to each other so that when the two strips are joined together at nip 29 into continuous strip 28, the individual cords of one strip will lie between the individual cord pairs of the other strip to provide for a plurality of closely spaced cords 18 throughout the transverse width of the strip.

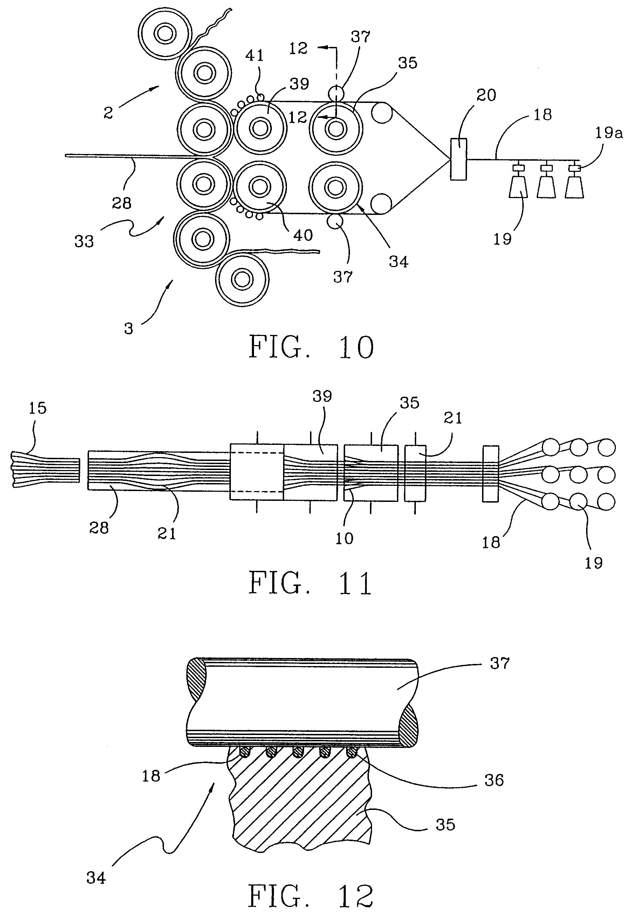

A modified apparatus and method of the invention is shown in FIGS. 10-12 and is indicated generally at 33. Apparatus 33 is similar in most respects to apparatus 1 described above, except that reciprocating cord guides 22 are replaced with a cord guide mechanism 34. Mechanism 34 consists of a grooved roll 35 having the same grooved pattern 10 formed therein as in cord positioning rolls 8 and 9. The individual grooves 36 (FIG. 12) formed in grooved roll 35 have the same pattern as pattern 10 of cord positioning rolls 8 and 9, but are deeper in order to firmly retain individual cords 18 therein. Cords 18 are further retained in the individual grooves by a retaining roll 37 mounted in close proximity to or in contact with the circumference of roll 35.

Modified apparatus 33 also may eliminate the vacuum chambers from within the cord positioning rolls by using solid grooved rolls 39 and 40 and a plurality of axially extending retaining rolls 41 located closely adjacent the circumference of rolls 39 and 40, adjacent nips 2a and 3a. Rolls 41 ensure that cords 18 which are located in roll grooves 11, remain in position until the cords are embedded in elastomeric strips 25 and 26 as discussed above.

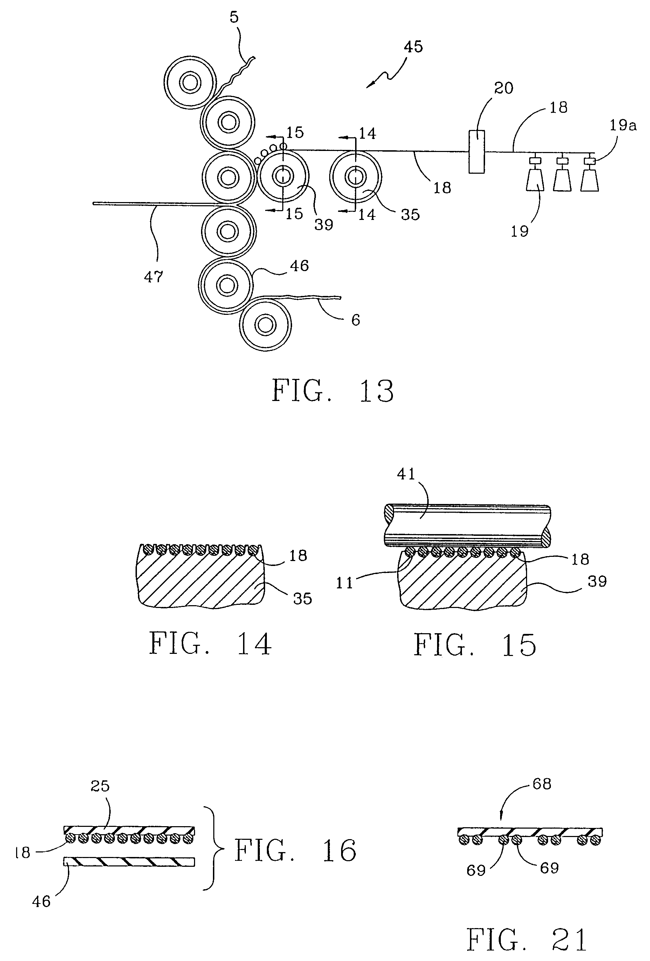

Another embodiment of the improved apparatus of the invention is indicated generally at 45, and is shown particularly in FIGS. 13-16. Apparatus 45 is generally similar to that of apparatus 33 except only a single grooved cord positioning roll 39 and cord guide roll 35, without roll 37, is used. Elastomeric feed strip 6 is passed through calender roll set 3 and formed into a uniform elastomeric strip or sheet 46 which when joined with calendered strip 25 containing reinforcing cords 18 embedded therein, form a finalized continuous strip 47 having the repeating configured pattern of reinforcing cords therein as described above. Strip 47 then is cut into individual strips 15. In this embodiment, the individual grooves in grooved rolls 35 and 39 may contain a more closely spaced pattern of grooves than the spacing of grooves 11 in rolls 8 and 9 since reinforced strip 25 will not be joined with another elastomeric strip containing reinforcing cords as discussed previously. Thus, for certain applications, the number of cords and the spacings thereof may be satisfied by using only a single grooved cord positioning roll 39, with the reinforced strip produced thereby being subsequently joined with non-reinforced calendered strip 46 to form strip 47. If desired, feed strip 6 may be of a different elastomeric compound than feed strip 5.

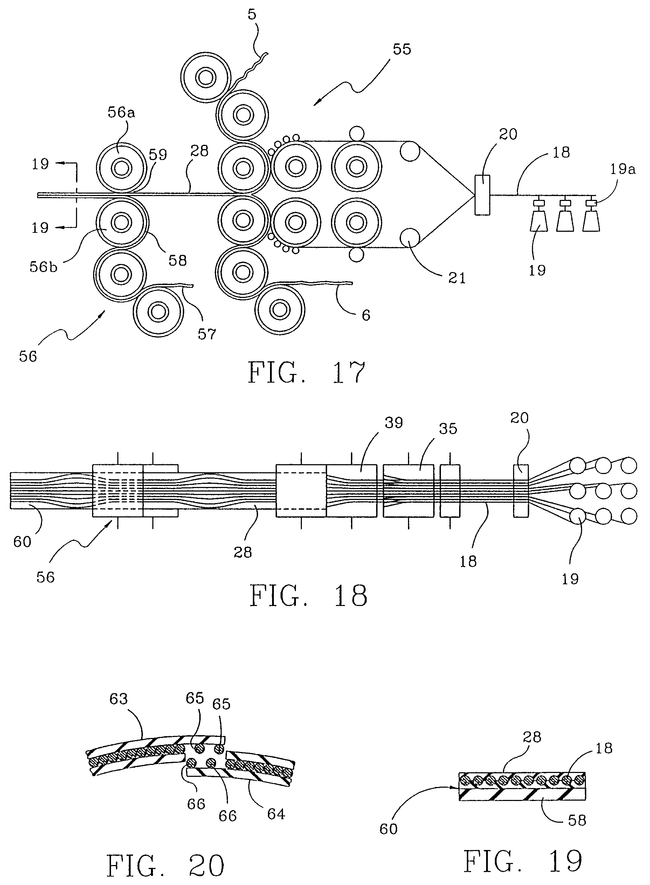

A fourth embodiment of the invention is indicated generally at 55, and is shown particularly at FIGS. 17-19. Embodiment 55 is similar in most respects to the various embodiments described above except that another calender roll set 56, is mounted downstream of the other pair of calender roll sets 2 and 3. Roll set 56 is supplied with an elastomeric feed strip 57 from a third extruder (not shown) which produces a calender strip 58. Strip 58 is joined with reinforced strip 28 at nip 59 between rolls 56a and 56b of calender roll set 56 to form a three layer strip 60 (FIG. 19). The elastomeric material of feed strip 57 and resulting non-reinforced strip 58, preferably will be of a different compound than the elastomeric material of feed strips 5 and 6, and for certain tire constructions will provide the innerliner therefor. The various cord guide assemblies and calender roll configurations for embodiment 55 may vary or be the same as shown for embodiment 1, embodiments 33 or 45, or a combination thereof, without effecting the concept of the invention.

The various embodiments 1, 33, 45 and 55 all provide for the positive positioning of the individual reinforcing cords 18 in a grooved roll, the circumference of which is equal to the periodicity of the resulting cord configuration in ply strips 15 to be produced thereby, so that the uniform calendered strip or strips of elastomeric material are joined with the configured pattern of positively retained cords at the nip between one of the calender rolls and the grooved cord containing roll. This ensures that the cords are retained in the configured pattern until engaged with and embedded in the elastomeric strip to prevent any movement of the cords prior to engaging the elastomeric material, which is not possible with prior methods and apparatus.

FIG. 20 shows a pair of modified cord reinforced strips 63 and 64 wherein the endmost cords 65 and 66 are embedded into a longitudinal edge portion of each of the strips so as to interlock with the end cord pairs extending along the longitudinal edge portions of the other strip when they are placed on tire building mandrel 16, such as shown in FIG. 9.

FIG. 21 shows a further modification to the elastomeric strip of the invention. In this embodiment, a modified cord reinforcing strip 68 has a plurality of cords 69 arranged in pairs, which pairs are uniformly spaced throughout the transverse width of the elastomeric strip. Even with this spaced pair arrangement of cords, the grooved pattern such as shown in the grooved rolls of FIGS. 5 and 5a is maintained through the circumference of the roll so that the spacing is greater at the center of the pattern than at the ends. Furthermore, it is readily understood that cords 69 as well as cords 18, may be formed of different types of materials in the same contoured strip or could have other cord modifications than that shown in FIG. 20. For example, every other cord may be formed of one material with the intervening cords being formed of a second material or various combinations thereof.

Accordingly the improved method and apparatus is simplified, and provides an effective, safe, inexpensive, and efficient means to achieve all of the enumerated objectives, provides for eliminating difficulties encountered with prior methods and apparatus, and solves problems and obtains new results in the art.

In the foregoing description, certain terms have been used for brevity, clearness and understanding; but no unnecessary limitations are to be implied there from beyond the requirement of the prior art, because such terms are used for descriptive purposes and are intended to be broadly construed.

Moreover, the description and illustration of the invention is by way of example, and the scope of the invention is not limited to the exact details shown or described.

Having now described the features, discoveries and principles of the invention, the manner in which the improved method and apparatus for making contoured strips containing reinforcing cords is constructed and used, the characteristics of the construction and method steps, and the advantageous, new and useful results obtained; the new and useful structures, devices, elements, arrangements, parts, method steps and combinations, are set forth in the appended claims.

## Claims

1. In a method of forming a contoured strip (15) of elastomeric material containing reinforcing cords (18) embedded in the elastomeric material in a contoured configuration, wherein a uniform strip (25) of elastomeric material is brought into contact with a cord positioning roll (8, 39) having a groove pattern (10) formed therein by a plurality of grooves (11) extending circumferentially around the roll, and wherein the circumference of the roll is equal to the length of the desired reinforced strip (15) and the groove pattern has the contoured configuration that the cords will take when embedded in the elastomeric material; characterized by the steps of:
feeding a plurality of the individual reinforcing cords (18) towards the cord positioning roll (8, 39) and into the grooves (11) of the roll to accurately space the cords;
feeding elastomeric material (5) between the nip of a pair of rotating calender rolls (2a, 2b) to form the uniform strip (25) of elastomeric material; and then
bringing the uniform strip (25) of elastomeric material into direct contact with the spaced cords at a nip between the cord positioning roll and one of the calender rolls (2a) to at least partially embed the spaced cords into the strip of elastomeric material to form a reinforced strip of elastomeric material (28) containing the contoured cord configuration which is subsequently formed into the reinforced contoured strip (15).

2. In a method according to Claim 1 characterized by the step of providing a negative pressure (23, 24) in certain grooves (11) of the cord positioning roll (8) to assist in maintaining the cords in said grooves until being embedded into the uniform strip of elastomeric material (25).

3. In a method according to Claim 1 characterized by the step of uniformly spacing the individual reinforcing cords upstream of the cord positioning roll (8, 39).

4. In a method according to Claim 1 characterized by the step of applying a strip (46, 58) of non-reinforced elastomeric material to the strip (28) of elastomeric material containing the contoured configuration of cords.

5. In a method according to Claim 1 characterized by the steps of forming a second strip (26) of elastomeric material containing reinforcing cords (18) embedded therein in a similar contoured configuration as the first strip; and then joining the two cord reinforced elastomeric strips whereby the cords of each strip lie uniformly spaced between adjacent pairs of cords of the other strip.

6. In a method according to Claim 1 characterized by the step of maintaining the transverse distances between the cords equal, with said distances being greater at a central portion (12) of the contoured reinforced strip (15) than at two end portions (13) thereof.

7. In a method according to Claim 6 in which the spacing of the cords at the end portions (13) is greater than the transverse spacing of the cords inwardly therefrom toward the central portion (12) of the strip.

8. In a method according to Claim 1 characterized by the step of placing a plurality of the reinforced strips (15, 63, 64) in an overlapping relationship on a toroidal shaped mandrel (16) to form the carcass of a pneumatic tire, and interlocking adjacent longitudinal edges of the strips by positioning an endmost cord (65, 66) of each of the strips between a pair of spaced cords of the other strip.

9. In an apparatus (1) for forming a strip (15) of elastomeric material containing reinforcing cords (18) embedded in the elastomeric material in a contoured configuration (10), wherein the apparatus includes a plurality of individual reinforcing cord supplies (19); a first cord positioning roll (8, 39) formed with a plurality of grooves (11) extending circumferentially around the roll and having the contoured configuration (10) that the cords will take when embedded in the elastomeric material, and with the circumference of the roll being generally equal to the length of the contoured configuration of cords in the reinforced strip; and a supply of elastomeric material; characterized in that the apparatus has means (19a, 21) for feeding individual cords from the cord supplies into the grooves (11) of the cord positioning roll (8), and that a pair of calender rolls (2a, 2b) is provided for forming a uniform strip (25) of elastomeric material from the supply of elastomeric material, with one (2a) of the said calender rolls being closely adjacent the cord positioning roll (8) to provide a nip (27a) therebetween whereby the positively positioned cords in the positioning roll are placed directly into the elastomeric material at said nip to form the strip of elastomeric material containing the reinforcing cords arranged in the contoured configuration.

10. An apparatus according to Claim 9 characterized in that negative pressure means (23, 24) is formed in the cord positioning roll (8, 39) and communicates with the roll grooves (11) to assist in retaining the cords in the grooves of said roll until being placed directly into the elastomeric material.

11. An apparatus according to Claim 10 characterized in that cord guide means (20, 22, 35) is located between the cord supplies (19) and the cord positioning roll for controlling the spacing between the cords before said cords enter the grooves (11) in the cord positioning roll (8, 39); and that the cord guide means includes a roll (35) formed with a plurality of spaced circumferentially extending grooves (36) for receiving the individual cords therein.

12. An apparatus according to Claim 9 characterized in that retaining means (41) is located adjacent the cord positioning roll (39) for retaining the cords in the circumferential grooves of said cord positioning roll; and that the retaining means is a plurality of rolls (41) extending parallel with and in contact with to the cord positioning roll.

13. An apparatus according to Claim 9 in that a second cord positioning roll (9, 40) similar to said first positioning roll (8, 39), and a second pair of calender rolls (3a, 3b) for forming a second uniform strip (26) of elastomeric material, is provided for embedding therein a second plurality of cords contained within the grooves of the second cord positioning roll at the nip (27b) between one (3a) of said second calender roll pairs and said second cord positioning roll; and wherein said one calender roll (2a, 3a) of each pair of calender rolls joins together at a nip (29) therebetween, the two strips (25, 26) of elastomeric material containing the contoured configuration of cords.

14. An apparatus according to Claim 13 characterized in that the cords of the first elastomeric strip lie uniformly spaced between adjacent pairs of spaced cords of the second elastomeric strip when the strips are joined at the nip between the said one calender rolls.

15. An apparatus according to Claim 9 characterized in that a second pair of calender rolls (3a, 3b) is located adjacent the first pair of calender rolls (2a, 2b) and form a second uniform strip (26) of elastomeric material which is applied to the first strip of elastomeric material containing the cords at a nip (29) between one roll (2a, 3a) of each pair of calender rolls.

16. An apparatus according to Claim 9 characterized in that the transverse distances between the cords are equal, with said distances being greater at a central portion (12) of the strip than at two end portions (13) thereof.

17. An apparatus according to Claim 9 characterized in that the cords (69) are arranged in individual groups of cords within the elastomeric material with the transverse spacing between the cords of each group being equal; and in that the transverse spacing between the individual groups being greater than said spacing between the individual cords of the group.
